# EUROPEAN PATENT APPLICATION

(11) **EP 3 009 599 A1**
(43) Date of publication of application: **20.04.2016**
(21) Application number: 15190282.2
(22) Date of filing: 16.10.2015
(51) Int. Cl.: F01D 5/18

(54) **GAS TURBINE ENGINE COMPONENT WITH FILM COOLING HOLE FEATURE**

(30) Priority: 17.10.2014 US 201462065185 P
(71) Applicant: United Technologies Corporation, Farmington, CT 06032 (US)
(72) Inventor: SLAVENS, Thomas N., Moodus, CT 6469 (US); JENNINGS, Timothy J., South Windsor, CT Connecticut 06074 (US); PEREZ, Roberto J., Windsor, CT Connecticut 06095 (US)
(74) Representative: Leckey, David Herbert

(57) **Abstract**

A gas turbine engine component (64) includes a wall (94) that provides an exterior surface (79) and an interior flow path surface (96). A film cooling hole (92) extends through the wall (94) and is configured to fluidly connect the interior flow path surface (96) to the exterior surface (79). The film cooling hole (92) has a diffuser (100) that is arranged downstream from a metering hole (98). The diffuser (100) includes inner and outer diffuser surfaces (104,102) opposite one another and respectively arranged on sides near the interior flow path surface (96)and the exterior surface (79). A protrusion (106) is arranged in the diffuser on the outer diffuser surface (102).

## Description

### BACKGROUND

This disclosure relates to a gas turbine engine component, such as a turbine airfoil. Particularly, the disclosure relates to a film cooling hole used to communicate fluid from an internal passageway to an exterior surface.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The advancement of turbomachinery performance is linked to both the overall pressure ratio of the machine and the turbine inlet temperature that can be reliably sustained during service. Increases in efficiency through either of these methods typically produces a hotter operating environment for turbine flow path hardware in which the working fluid is typically several hundreds of degrees hotter than the melting point of the component alloys. Dedicated cooling air is extracted from the compressor and used to cool the gas path components in the turbine, which can incur significant cycle penalties.

For extremely high temperature applications, film cooling is typically utilized along with backside convection. This method uses cooling air delivered internal of the component and expelled through holes in the exterior airfoil surface to provide a cooling flow over the external surface that reduces the local external surface temperatures downstream. Typically cooling holes are machined into the part and are round or diffuser shaped as permitted by a typical laser or EDM machining process.

### SUMMARY

In one exemplary embodiment, a gas turbine engine component includes a wall that provides an exterior surface and an interior flow path surface. A film cooling hole extends through the wall and is configured to fluidly connect the interior flow path surface to the exterior surface. The film cooling hole has a diffuser that is arranged downstream from a metering hole. The diffuser includes inner and outer diffuser surfaces opposite one another and respectively arranged on sides near the interior flow path surface and the exterior surface. A protrusion is arranged in the diffuser on the outer diffuser surface.

In a further embodiment of the above, the gas turbine engine component is a turbine airfoil and the exterior surface is an exterior airfoil surface.

In a further embodiment of any of the above, the metering hole provides an inlet at the interior flow path surface. The diffuser provides an exit that is arranged downstream at the exterior surface.

In a further embodiment of any of the above, the metering hole includes a diameter in the range of 0.010 - 0.270 inch (0.25 - 6.86 mm).

In a further embodiment of any of the above, the metering hole extends a length in a range of 1.8-3.5 times the diameter.

In a further embodiment of any of the above, the film cooling hole is configured to extend in a direction corresponding to a core gas flow over the exterior surface.

In another exemplary embodiment, a gas turbine engine includes a compressor section, a combustor and a turbine section. A component is arranged in one of the compressor section and combustor and turbine sections. The component includes a wall that provides an exterior surface and an interior flow path surface. A film cooling hole extends through the wall and is configured to fluidly connect the interior flow path surface to the exterior surface. The film cooling hole has a diffuser that is arranged downstream from a metering hole. The diffuser includes inner and outer diffuser surfaces opposite one another and respectively arranged on sides near the interior flow path surface and the exterior surface. A protrusion is arranged in the diffuser on the outer diffuser surface.

In a further embodiment of any of the above, the component is arranged in the turbine section.

In a further embodiment of any of the above, the exterior surface is an exterior airfoil surface.

In a further embodiment of any of the above, the metering hole provides an inlet at the interior flow path surface. The diffuser provides an exit arranged downstream at the exterior surface.

In a further embodiment of any of the above, the metering hole includes a diameter in the range of 0.010 - 0.270 inch (0.25 - 6.86 mm).

In a further embodiment of any of the above, the metering hole extends a length in a range of 1.8-3.5 times the diameter.

In a further embodiment of any of the above, the film cooling hole is configured to extend in a direction corresponding to a core gas flow over the exterior surface.

In another exemplary embodiment, a method of cooling a gas turbine engine component exterior surface includes the steps of providing a film cooling hole that extends through a wall and is configured to fluidly connect an interior flow path surface of the wall to an exterior surface of the wall. The film cooling hole has a diffuser that is arranged downstream from a metering hole. A protrusion is arranged in the diffuser and generates a recirculating flow at an upstream portion of the exterior surface adjacent to the surface which creates an enhanced attachment zone at a downstream portion of the exterior surface.

In a further embodiment of the above, the diffuser includes lateral edges at an acute angle relative to one another. The lateral edges have flow regions at the exterior surface that are free of recirculation flows.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2A is a perspective view of an airfoil having the disclosed film cooling hole arrangement.
Figure 2B is a plan view of the airfoil illustrating directional references.
Figure 3 is a cross-sectional view through a wall of a gas turbine engine component having the film cooling hole.
Figure 4 is a plan view of an exterior surface of the gas turbine engine component.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

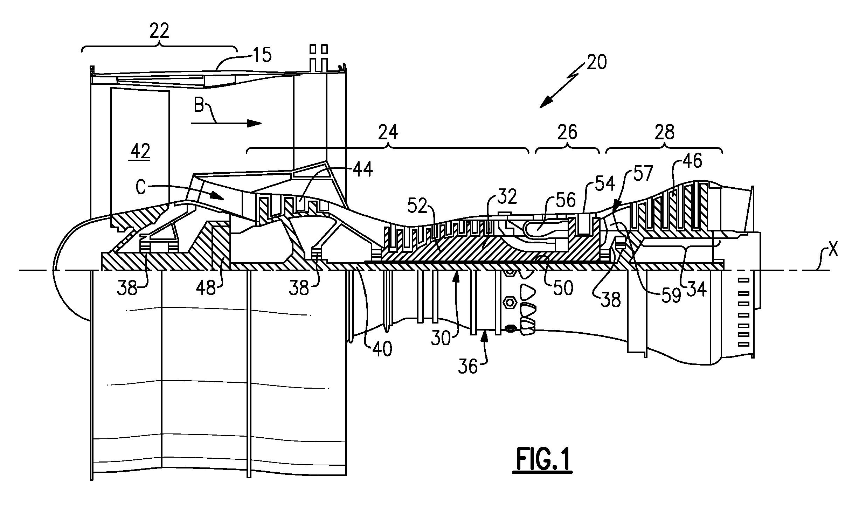

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

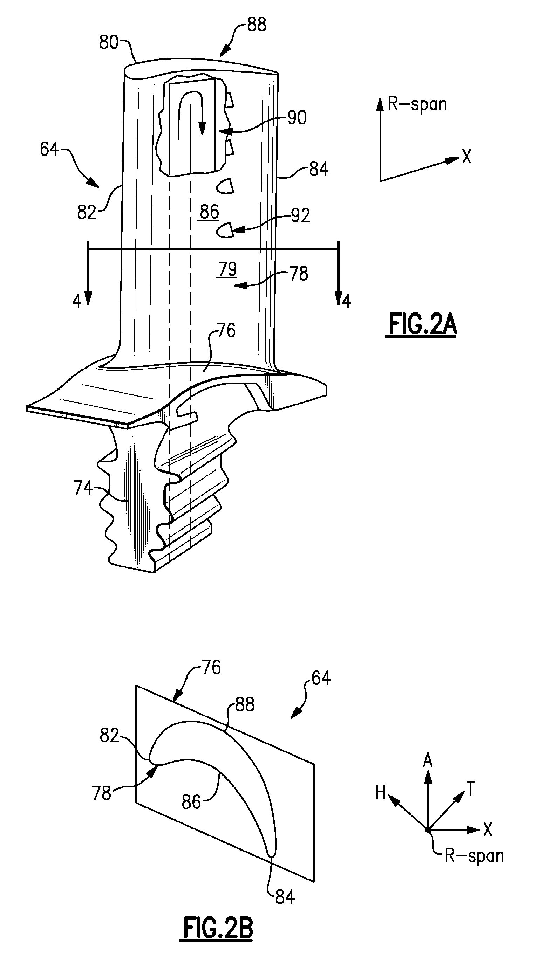

Referring to Figure 2A, a serpentine cooling passage 90 may be used in various gas turbine engine components. This passage or another passage may be used to feed cooling fluid to film cooling holes that extend to the exterior airfoil surface. Typically the compressor section 24 provides the cooling fluid, but other cooling fluid sources may be used. For exemplary purposes, a turbine airfoil such as blade 64 is described. It should be understood that the film cooling hole configuration may also be used for other gas turbine engine components, such as in vanes, blade outer air seals, and turbine platforms, for example.

Referring to Figures 2A and 2B, a root 74 of each turbine blade 64 is mounted to the rotor disk. The turbine blade 64 includes a platform 76, which provides the inner flow path, supported by the root 74. An airfoil 78 extends in a radial direction R from the platform 76 to a tip 80. It should be understood that the turbine blades may be integrally formed with the rotor such that the roots are eliminated. In such a configuration, the platform is provided by the outer diameter of the rotor. The airfoil 78 provides leading and trailing edges 82, 84. The tip 80 is arranged adjacent to a blade outer air seal (not shown).

The airfoil 78 of Figure 2B somewhat schematically illustrates exterior airfoil surface 79 extending in a chord-wise direction H from a leading edge 82 to a trailing edge 84. The airfoil 78 is provided between pressure (typically concave) and suction (typically convex) wall 86, 88 in an airfoil thickness direction T, which is generally perpendicular to the chord-wise direction H. Multiple turbine blades 64 are arranged circumferentially in a circumferential direction A. The airfoil 78 extends from the platform 76 in the radial direction R, or spanwise, to the tip 80.

The cooling passage 90 is provided between the pressure and suction walls 86, 88. The exterior airfoil surface may include multiple film cooling holes 92 in fluid communication with the cooling passage 90, best shown in Figures 2A, 3 and 4.

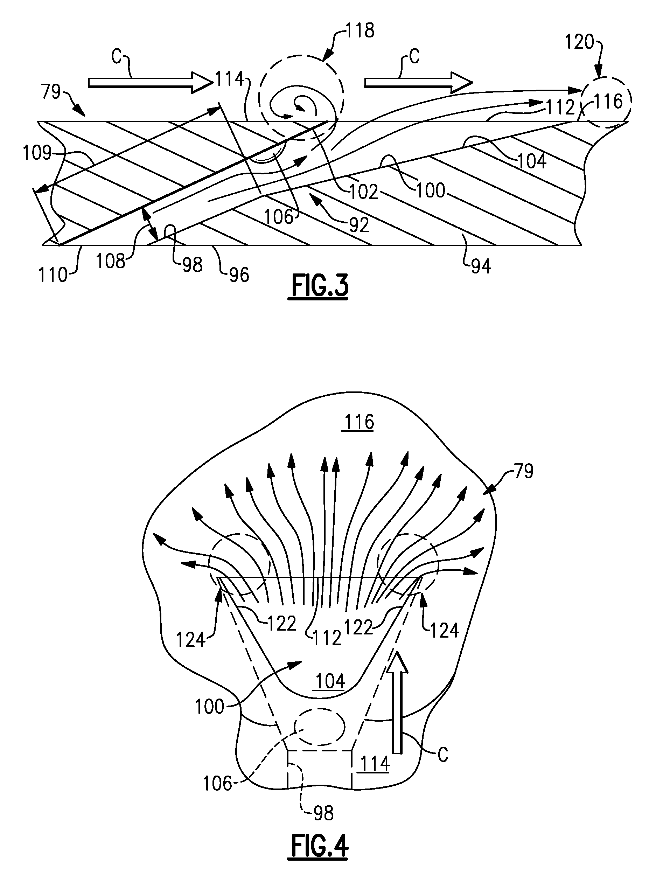

Figure 3 is a cross-sectional view through a wall 94 of a gas turbine engine component, such as the turbine blade shown in Figures 2A-2B. The wall 94 provides the exterior surface 79 and an interior flow path surface 96 facing the cooling passage 90, which extends in a longitudinal direction.

The film cooling hole 92 extends through the wall 94 and is configured to fluidly connect the interior flow path surface 96 to the exterior surface 79. The film cooling hole 92 includes a metering hole 98 and a diffuser 100. The metering hole 98 has an inlet 110 at the interior flow path surface 96, and the diffuser 100 has an exit 112 arranged downstream from the metering hole 104 at the exterior surface 79. The metering hole 98 has a diameter 108 and a length 109. In the example, the metering hole 96 includes a diameter in the range of 0.010 - 0.270 inch (0.25 - 6.86 mm), and the length 109 is in a range of 1.8-3.5 times the diameter 108.

In the example, the metering hole 98 and diffuser 100 are configured to extend is a direction corresponding to a core gas flow C over the exterior surface 79, as shown in Figures 3 and 4. As a result, the cooling film flow (small arrows in Figures 3 and 4) exiting the diffuser 100 is oriented in generally the same direction as the flow of core gas flow C. It should be understood that other flow orientations may also be used.

The diffuser 100 includes inner and outer diffuser surfaces 102, 104 opposite one another and respectively arranged on sides near the interior flow path surface 96 and the exterior surface 79, as best shown in Figure 3. A protrusion 106 is arranged on the outer diffuser surface 102, which enhances the cooling provided by the flow exiting the diffuser 100.

The protrusion 106 upsets the direct flow of cooling fluid through the film cooling hole 96, causing a local circulation on the outer surface 102 within the diffuser 100 downstream from the protrusion 106. This protrusion pushes cooling fluid lower and toward the inner surface 104 allowing for better expansion of flow. A recirculation flow 118 is generated at an upstream portion 114 of the exterior surface 79. At the same time, flow regions 124 near lateral edges 122, which are at an acute angle relative to one another, of the diffuser 100 (Figure 4) disrupt counter-rotating vortices typically present such that the flow regions 124 are provided free of recirculation flows. This causes less-cool fluid to be diffused away in a downstream portion 116 of the exterior surface 79 (Figure 3) such that the cooling fluid attaches more effectively to the exterior of the component. With the more efficient creation of a boundary layer of cooling fluid on the exterior surface 79, a reduction of up to 10% cooling fluid to the component may be realized, which improves the efficiency of the compressor section and engine overall.

The film cooling hole 92 may be formed using by conventional casting technologies when possible. In some cases, it may be difficult to form these features using conventional casting technologies. Thus, an additive manufacturing process may be used.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine component (64) comprising:
a wall (94) providing an exterior surface (79) and an interior flow path surface (96);
a film cooling hole (92) extending through the wall (94) and configured to fluidly connect the interior flow path surface (96) to the exterior surface (79), the film cooling hole (92) having a diffuser (100) arranged downstream from a metering hole (98), wherein the diffuser (100) includes inner and outer diffuser surfaces (104,102) opposite one another and respectively arranged on sides near the interior flow path surface (96) and the exterior surface (79) and a protrusion (106) arranged in the diffuser (100) on the outer diffuser surface (102).

2. The gas turbine engine component according to claim 1, wherein the gas turbine engine component is a turbine airfoil (78) and the exterior surface (79) is an exterior airfoil surface.

3. The gas turbine engine component according to claim 1 or 2, wherein the metering hole (98) provides an inlet (110) at the interior flow path surface (96), and the diffuser (100) provides an exit (112) arranged downstream at the exterior surface (79).

4. The gas turbine engine component according to any preceding claim, wherein the metering hole (98) includes a diameter (108) in the range of 0.010 - 0.270 inch (0.25 - 6.86 mm).

5. The gas turbine engine component according to claim 4, wherein the metering hole (98) extends a length (109), the length (109) in a range of 1.8-3.5 times the diameter.

6. The gas turbine engine component according to any preceding claim, wherein the film cooling hole (92) is configured to extend in a direction corresponding to a core gas flow (C) over the exterior surface (79).

7. A gas turbine engine (20) comprising:
a compressor section (24);
a combustor (26);
a turbine section (28); and
a component (64) arranged in one of the compressor section (24), the combustor (26) and turbine section (28), the component (64) being a component according to any preceding claim.

8. The gas turbine engine according to claim 7, wherein the component (64) is arranged in the turbine section.

9. The gas turbine engine according to claim 8, wherein the exterior surface (79) is an exterior airfoil surface.

10. A method of cooling a gas turbine engine component exterior surface (79), the method comprising the steps of:
providing a film cooling hole (92) extending through a wall (94) and configured to fluidly connect an interior flow path surface (96) of the wall (94) to an exterior surface (79) of the wall (94), the film cooling hole (92) having a diffuser (100) arranged downstream from a metering hole (98), and a protrusion (106) arranged in the diffuser (100); and
generating a recirculating flow at an upstream portion of the exterior surface (97) adjacent to the surface which creates an enhanced attachment zone at a downstream portion of the exterior surface (79).

11. The method according to claim 10, wherein the diffuser (100) includes lateral edges (122) at an acute angle relative to one another, the lateral edges (122) having flow regions (124) at the exterior surface that are free of recirculation flows.
